**Europäisches Patentamt**

**European Patent Office**

**Office européen des brevets**

(19)

(11) Veröffentlichungsnummer : **0 326 845 B1**

(12)

# EUROPÄISCHE PATENTSCHRIFT

(45) Veröffentlichungstag der Patentschrift :
**15.04.92 Patentblatt 92/16**

(51) Int. Cl.$^5$ : **B01D 53/36,** B01J 23/56,
B01J 23/89

(21) Anmeldenummer : **89100695.9**

(22) Anmeldetag : **17.01.89**

(54) **Katalysator für die Reinigung der Abgase von Brennkraftmaschinen.**

(30) Priorität : **03.02.88 DE 3803122**

(43) Veröffentlichungstag der Anmeldung :
**09.08.89 Patentblatt 89/32**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI LU NL SE**

(56) Entgegenhaltungen :
**EP-A- 0 027 069
EP-A- 0 142 858
EP-A- 0 171 151
EP-A- 0 203 525
DE-A- 2 907 106
US-A- 4 367 162**

(73) Patentinhaber : **Degussa Aktiengesellschaft
Weissfrauenstrasse 9
W-6000 Frankfurt am Main 1 (DE)**

(72) Erfinder : **Domesle, Rainer, Dr.
Wingertstrasse 202
W-6457 Maintal 1 (DE)**
Erfinder : **Engler, Bernd, Dr.
Treuener Strasse 2
W-6450 Hanau 9 (DE)**
Erfinder : **Koberstein, Edgar, Dr.
Wolfskernstrasse 8
W-8755 Alzenau (DE)**
Erfinder : **Schubert, Peter, Dr.
Grünaustrasse 17
W-6450 Hanau 9 (DE)**

**Beschreibung**

Die Erfindung betrifft einen Katalysator für die Reinigung der Abgase von Brennkraftmaschinen durch Oxidation und/oder Reduktion. Die Katalysatoren können die Platingruppenmetalle Platin, Palladium und Rhodium einzeln oder in Kombination enthalten. Sie können, je nach Zusammensetzung als Oxidationskatalysator, als Reduktionskatalysator eines Doppelbettreaktors (hier wird das Abgas zuerst einem Reduktionskatalysator und dann nach Luftbeimischung einem Oxidationskatalysator zugeführt) oder als multifunktioneller Katalysator für die gleichzeitige Konversion der oxidierbaren und der reduzierbaren Bestandteile des Abgases, verwendet werden

Vor dem Hintergrund der Kraftstoffeinsparung zeigen moderne Motorkonzepte überwiegend Arbeitsphasen mit Sauerstoffüberschuß, so daß zunehmend Katalysatoren mit verbesserter Mageraktivität gefordert werden. Die Mageraktivitäten herkömmlicher Katalysatoren erweisen sich bei obengenannten Motorkonzepten häufig als unzureichend. Es bestand daher ein dringendes Bedürfnis, diesem Mangel abzuhelfen.

Die Erfindung geht im wesentlichen von der allgemeinen Lehre der DE-C-29 07 106 zur Formulierung von Abgasreinigungskatalysatoren aus, welche Platin, Rhodium und gegebenenfalls Nickel als aktive Phase auf einem durch Zusätze von $CeO_2$, $Fe_2O_3$ und $ZrO_2$ modifizierten Träger aus $Al_2O_3$ der Übergangsreihe enthalten, erweitert diese in bezug auf die in Frage kommenden Edelmetalle der aktiven Phase und deren Kombinationen und ergänzt die bisher zusammen mit diesen verwendbaren Unedelmetallkomponente durch ein neues obligatorisch einzusetzendes Element, mit der die Aufgabe, die Magerstabilität anzuheben gelöst und ein universell für die Oxidation und/oder Reduktion der Abgase von Verbrennungskraftmaschinen verwendbarer Katalysatortyp erhalten wird.

Gegenstand der Erfindung ist ein Katalysator für die Reinigung der Abgase von Brennkraftmaschinen mit Aluminiumoxid der Übergangsreihe als Träger, welcher 5 bis 70 Gew.-% $CeO_2$ und 1 bis 20 Gew.-% $ZrO_2$ und 0 bis 10 Gew.-% $Fe_2O_3$ und 0 bis 20 Gew.-% NiO enthält, und einer auf den Träger aufgebrachten aktiven Phase aus 0,03 bis 3 Gew.-% Platin, Palladium und/oder Rhodium und einem Unedelmetall, mit einem Gewichtsverhältnis zwischen Platin und/oder Palladium und dem gegebenenfalls anwesenden Rhodium von 2 : 1 bis 20 : 1, erhältlich durch Imprägnieren des gegebenenfalls gitterstabilisierten Trägers mit einer wäßrigen Lösung von Cer- und Zirkoniumsalz sowie gegebenenfalls Eisensalz und/oder Nickelsalz oder durch Vermischen des gegebenenfalls gitterstabilisierten Trägers mit einer wäßrigen Suspension von deren Oxiden, Hydroxiden oder Carbonaten und nachfolgendes Tempern an Luft bei 500 bis 900° C sowie anschließendes Imprägnieren des Trägers mit einer wäßrigen Lösung eines Salzes des Edelmetalls und des Unedelmetalls, Trocknen und Behandeln in einem Wasserstoff enthaltenden Gasstrom bei Temperaturen von 250 bis 650° C, wobei der Katalysator gegebenenfalls in Form eines Überzugs auf einem wabenförmigen Träger aus Keramik oder Metall in einer Menge von 5 bis 30 Gew.-%, bezogen auf das Gewicht des Trägers vorliegt.

Der Katalysator ist dadurch gekennzeichnet, daß die durch Imprägnieren aufgebrachte aktive Phase neben den Edelmetallen als Unedelmetall Cer in einer Menge von 0,01 bis 150 Gew.-%, bezogen auf das Gesamtgewicht der vorliegenden Edelmetalle, enthält.

Das Wesen der Erfindung beruht also darin, das bisher nur zur Dotierung des katalysefördernden Trägermaterials $Al_2O_3$ der sog. Übergangsreihe, z. B. gamma-Aluminiumoxid in relativ hohen Mengen eingesetzte Element Cer in innige Wechselwirkung mit der die Platingruppenmetalle enthaltenden Katalysatorkomponente, der sog. aktiven Phase, zu bringen. Dabei erweisen sich bereits sehr kleine Mengen an Cer als wirksam, in dem sie die Katalysatoraktivität insbesondere bei Betriebszuständen mit Sauerstoffüberschuß erheblich steigern. Diese Aktivitätssteigerung betrifft die Kohlenwasserstoffkonversion, aber vor allem die $NO_x$-Umsetzung. Gleichzeitig wird durch die Mitverwendung des Cers in der Edelmetallkomponente die Kohlenwasserstoffkonversion in fetten Abgasen angehoben.

Die Dotierung der Trägerkomponente mit $CeO_2$, $ZrO_2$ und gegebenenfalls $Fe_2O_3$ und/oder Nio erfolgt im wesentlichen nach den in DE-C-29 07 106 beschriebenen Maßnahmen. Falls Palladium alleine oder in Kombination mit einem oder mehreren der anderen Platingruppenmetalle eingesetzt wird, verwendet man ein wasserlösliches Salz dieses Metalls, beispielsweise $Pd(NO_3)_2$ oder $PdCl_2$.

Wesentlich für die Erzielung der erfindungsgemäßen Wirkung ist, daß mindestens eines der Platingruppenmetalle, vorzugsweise alle, zusammen mit dem Cer in Form einer die Salze aller Elemente enthaltenden Lösung zur Imprägnierung kommen. Eine abschließende Wasserstoffbehandlung der noch ungetemperten Vorstufe der aktiven Phase empfiehlt sich insbesondere bei Anwesenheit von Rhodium.

Das Trägermaterial, z. B. gamma-Aluminiumoxid und/oder eine andere Kristallphase aus dem Übergangsfeld zu alpha-Aluminiumoxid, kann durch Imprägnieren mit Lösungen von Salzen der Erdalkalimetalle, von Zirkon und von Elementen der Reihe der Seltenen Erden sowie siliciumhaltiger Verbindungen und anschließendes etwa 4 bis 12-stündiges Erhitzen gitterstabilisiert sein. Anstelle der Imprägnierung kann eine Kopräzipitation von Salzen des Aluminiums und der Stabilisatorvorstufe erfolgt sein.

2

Ein weiterer Gegenstand der Erfindung ist die Verwendung des erfindungsgemäßen Katalysators zur Reinigung der Abgase von Verbrennungskraftmaschinen.

Je nach Wahl der Katalysatorkomposition kann ein nur oxidierendes, ein nur reduzierendes, ein nacheinander oxidierendes und reduzierendes oder ein gleichzeitig oxidierendes und reduzierendes Abgasreinigungssystem bestückt werden. Oxidationskatalysatoren enthalten als aktive Phase vorzugsweise Platin und Palladium, Reduktionskatalysatoren vorzugsweise Platin und Rhodium, Doppelbettsysteme einen Platin und Rhodium enthaltenden ersten Katalysator und einen Platin, Platin/Palladium, Platin/Rhodium oder Platin/Palladium/Rhodium enthaltenden zweiten Katalysator; multifunktionelle Katalysatoren enthalten vorzugsweise Platin/Rhodium oder Platin/Palladium/Rhodium.

Alle genannten aktiven Phasen enthalten aber erfindungsgemäß Cer in der genannten Menge, welches gleichzeitig mit den Platingruppenmetallen in den Katalysator eingebracht wird.

Die Erfindung wird im folgenden durch Ausführungsbeispiele weiter erläutert.

Vergleichsbeispiel 1

Ein keramischer Wabenkörper aus Cordierit mit 62 Zellen/$cm^2$ wurde mit 160 g/l Trägervolumen eines Oxidgemisches beschichtet. Hierzu wurde eine wäßrige Suspension mit einem Feststoffgehalt von 52 Gew.% und folgender Zusammensetzung für das nach Aktivierung vorliegende Oxidgemisch verwendet:

| | |
|---|---|
| 74,9 Gew.-Teile | $\gamma$-$Al_2O_3$ mit einer spezifischen Oberfläche von 142 $m^2$/g |
| 21,8 Gew.-Teile | $CeO_2$, eingesetzt als Ammonium-cer(IV)-nitrat $[Ce(NO_3)_6](NH_4)_2$ |
| 1,9 Gew.-Teile | Zirkondioxid, eingesetzt als basisches Zirkoncarbonat |
| 1,4 Gew.-Teile | $Fe_2O_3$, eingesetzt als Eisennitrat $Fe(NO_3)_3 \cdot 9H_2O$ |

Nach der Belegung des Trägerkörpers mit der Oxidschicht wurde bei 120° C getrocknet und sodann 15 Minuten bei 350° C und weitere 2 Stunden bei 700° C aktiviert.

Anschließend wurde der so beschichtete Trägerkörper in eine wäßrige Lösung von Hexachloroplatinsäure und Rhodiumchlorid im Gewichtsverhältnis 5 : 1 getaucht und getrocknet. Der Gesamtedelmetallgehalt betrug nach dieser Behandlung 0,70 g/l Trägervolumen. Nach einer zwei-stündigen Temperung bei 550° C an Luft erfolgte schließlich die Reduktion der auf dem Trägermaterial abgeschiedenen Edelmetallsalze im Wasserstoffstrom bei einer Temperatur von 550° C für die Dauer von 4 Stunden.

Beispiel 1

Ein keramischer Wabenkörper wurde mit der gleichen Oxidschicht und auf gleiche Weise wie in Vergleichsbeispiel 1 beschrieben, beschichtet, getrocknet und aktiviert. Die Methode für die Aufbringung der Edelmetalle auf den beschichteten Träger entsprach im wesentlichen ebenfalls der Arbeitsweise von Vergleichsbeispiel 1. Im Unterschied zu Vergleichsbeispiel 1 enthielt jedoch die wäßrige Edelmetallimprägnierlösung neben Hexachloroplatinsäure und Rhodiumchlorid zusätzlich Cer(III)nitrat. Der Gesamtedelmetallgehalt betrug nach der Imprägnierung der beschichteten Träger 0,70 g/l Trägervolumen bei einem Edelmetallverhältnis des Pt : Rh von 5 : 1.

Die durch diese Imprägnierung zusätzlich eingebrachte $CeO_2$-Menge betrug 0,007 g/l Trägervolumen.

Beispiel 2

Die Präparation dieses Katalysators erfolgte analog Beispiel 1. Die durch die Pt/Rh/Ce-Imprägnierung zusätzlich eingebrachte Ceroxidmenge betrug hier jedoch 0,07 g/l Trägervolumen.

Beispiel 3

Die Präparation dieses Katalysators erfolgte analog Beispiel 1. Die durch die Pt/Rh/Ce-Imprägnierung zusätzlich eingebrachte Ceroxidmenge betrug hier 0,35 g/l Trägervolumen.

Beispiel 4

Die Präparation dieses Katalysators erfolgte analog Beispiel 1. Die durch die Pt/Rh/Ce-Imprägnierung zusätzlich eingebrachte Ceroxidmenge betrug jedoch $7 \times 10^{-4}$ g/l Trägervolumen.

Beispiel 5

Die Präparation dieses Katalysators erfolgte analog Beispiel 1. Die durch die Pt/Rh/Ce-Imprägnierung zusätzlich eingebrachte Ceroxidmenge betrug $35 \times 10^{-4}$ g/l Trägervolumen.

Beispiel 6

Ein keramischer Wabenkörper (62 Zellen/cm²) wurde auf dieselbe Weise wie in Vergleichsbeispiel 1 beschrieben, mit Washcoat beschichtet, getrocknet und aktiviert. Die Oxidschicht hatte folgende Zusammensetzung:

61,4 Gew.-Teile     γ-Aluminiumoxid
36,8 Gew.-Teile     Ceroxid, als Cer(III)acetat
1,8 Gew.-Teile     Zirkonoxid, als Zirkon(IV) acetat

Die Aufbringung der Edelmetalle Platin und Rhodium erfolgte ebenfalls nach der in Vergleichsbeispiel 1 angegebenen Methode. Zusätzlich enthielt die Edelmetallimprägnierlösung jedoch Cer(III)nitrat. Der Gesamtedelmetallgehalt des fertigen Katalysators betrug 0,70 g/l Trägervolumen bei einem Edelmetallverhältnis von Pt : Rh von 5 : 1 Die durch die Pt/Rh/Ce-Imprägnierung zusätzlich eingebrachte $CeO_2$-Menge betrug 0,014 g/l Trägervolumen.

Vergleichsbeispiel 2

Ein Wabenkörper (62 Zellen/cm²) wurde mit der gleichen Oxidschicht und auf dieselbe Weise wie in Beispiel 6 beschrieben, beschichtet, getrocknet und aktiviert. Die Aufbringung der Edelmetalle auf den beschichteten Träger erfolgte im wesentlichen ebenfalls analog der Arbeitsweise von Beispiel 6. Platin wurde als Hexachloroplatinsäure und Palladium als Palladium(II)chlorid, eingesetzt.

Ein Zusatz an Cersalz zur Edelmetallimprägnierlösung entfiel. Der Gesamtedelmetallgehalt des fertigen Katalysators betrug 0,70 g/l Trägervolumen bei einem Edelmetallverhältnis von Pt : Pd von 3 : 1.

Beispiel 7

Die Präparation des Katalysators erfolgte analog Vergleichsbeispiel 2 mit dem Unterschied, daß der Edelmetallimprägnierlösung Cernitrat $Ce(NO_3)_3$ zugesetzt wurde. Die damit eingebrachte $CeO_2$-Menge betrug 0,014 g/l Trägervolumen.

Vergleichsbeispiel 3

Ein keramischer Wabenkörper (62 Zellen/cm²) wurde auf dieselbe Weise wie in Vergleichsbeispiel 1 beschrieben mit Washcoat beschichtet, getrocknet und aktiviert. Die Oxidschicht hatte folgende Zusammensetzung:

69.1 Gew.-Teile     γ-Aluminiumoxid
28.8 Gew.-Teile     Ceroxid, als Cer(III)nitrat
2.1 Gew.-Teile     Zirkonoxid, als Zirkonylnitrat

Die Aufbringung des Edelmetalls Platin erfolgte ebenfalls nach der in Vergleichsbeispiel 1 angegebenen Methode. Als Platinkomponente diente Hexachloroplatinsäure. Der Gesamtedelmetallgehalt des fertigen Katalysators betrug 0.70 g/l Trägervolumen.

Beispiel 8

Die Präparation dieses Katalysators erfolgte analog Vergleichsbeispiel 2 mit dem Unterschied, daß der Edelmetallimprägnierlösung Cer(III)nitrat zugesetzt wurde. Die damit eingebrachte $CeO_2$-Menge betrug $7 \times 10^{-4}$ g/l Trägervolumen.

Beispiel 9

Die Präparation dieses Katalysators erfolgte analog Beispiel 8 mit dem Unterschied, daß anstelle von Hexachloroplatinsäure Rhodium(III)chlorid eingesetzt wurde. Der Gesamtedelmetallgehalt des fertigen Katalysators betrug ebenfalls 0.70 g/l Trägervolumen. Die mit der Rhodiumimprägnierlösung zusätzlich eingebrachte Ceroxidmenge betrug hier jedoch 0.014 g/l Trägervolumen.

Beispiel 10

Die Präparation dieses Katalysators erfolgte analog Beispiel 8 mit dem Unterschied, daß zusätzlich zur Hexachloroplatinsäure Rhodium(III)chlorid eingesetzt wurde. Der Gesamtedelmetallgehalt des fertigen Katalysators betrug 0.70 g/l Trägervolumen bei einem Edelmetallverhältnis Pt : Rh von 5 : 1. Die mit der Edelmetallimprägnierlösung zusätzlich eingebrachte Ceroxidmenge betrug 0.021 g/l Trägervolumen.

Beispiel 11

Die Präparation dieses Katalysators erfolgte analog Beispiel 8. Ein Unterschied bestand darin, daß zusätzlich zur Hexachloroplatinsäure Rhodium(III)chlorid und Palladium(II)chlorid eingesetzt wurden. Der Gesamtedelmetallgehalt des fertigen Katalysators betrug 0.70 g/l Trägervolumen bei einem Edelmetallverhältnis des Pt : Pd : Rh von 2 : 3 : 1. Die mit der Edelmetallimprägnierlösung zusätzlich eingebrachte Ceroxidmenge betrug 0.007 g/l Trägervolumen.

Vergleichsbeispiel 4

Ein keramischer Wabenkörper (62 Zellen/cm$^2$) wurde auf dieselbe Weise wie in Vergleichsbeispiel 1 beschrieben mit Washcoat beschichtet, getrocknet und aktiviert. Die Oxidschicht hatte folgende Zusammensetzung:

| | |
|---|---|
| 54.6 Gew.-Teile | $\gamma$-Aluminiumoxid |
| 32.8 Gew.-Teile | Ceroxid, als Cer(III)nitrat |
| 11.0 Gew.-Teile | NiO |
| 1.6 Gew.-Teile | Zirkonoxid, als Zirkonylnitrat |

Die Aufbringung der Edelmetalle auf den beschichteten Wabenkörper erfolgte im wesentlichen analog der Arbeitsweise in Vergleichsbeispiel 1, mit dem Unterschied, daß die Edelmetallimprägnierlösung zusätzlich Palladium(II)-chlorid enthielt. Der Gesamtedelmetallgehalt des fertigen Katalysators betrug 0.70 g/l Trägervolumen bei einem Edelmetallgewichtsverhältnis von Pt : Pd : Rh von 1.8 : 2.5 : 1.

Beispiel 12

Die Präparation dieses Katalysators erfolgte analog Vergleichsbeispiel 4 mit dem Unterschied, daß der Edelmetallimprägnierlösung Cer(III)nitrat zugesetzt wurde. Die hiermit eingebrachte $CeO_2$-Menge betrug 0.07 g/l Trägervolumen.

Testung der Katalysatoren

Die Prüfung der nach den vorstehenden Präparationsbeispielen gefertigten Katalysatoren hinsichtlich ihrer Eigenschaften bei der Umsetzung der Abgasschadstoffe Kohlenmonoxid, Kohlenwasserstoffe und Stickoxide erfolgte in einer Testanlage, die mit einem synthetischen Gasgemisch, entsprechend dem einer Verbrennungskraftmaschine, arbeitet. Die Abmessungen der Testkatalysatoren waren generell zylindrisch (Durchmesser x Höhe = 1″ x 3″). Die Raumgeschwindigkeit betrug 50.000 h$^{-1}$. Als Kohlenwasserstoffkomponente wurde exemplarisch Propan verwendet.

### Zusammensetzung des synthetischen Abgases
### für λ = 1,01 (mager)

| Komponente | Vol.% |
|---|---|
| $N_2$ | 72,55 |
| $CO_2$ | 14,00 |
| $H_2O$ | 10,00 |
| $O_2$ | 1,42 |
| $CO$ | 1,40 |
| $H_2$ | 0,47 |
| $NO$ | 0,10 |
| $C_3H_8$ | 0,06 |

Die Gasmischung für die Simulation eines fetten Abgases (λ = 0,98) unterscheidet sich von der oben genannten Zusammensetzung lediglich dadurch, daß der Sauerstoffanteil entsprechend kleiner und der Stickstoffanteil entsprechend größer gewählt wurde.

Die Konversion der Schadstoffe CO, HC und NO wurde unter Gleichgewichtsbedingungen bei einer Abgastemperatur von 450° C ermittelt. Zur Charakterisierung des Kaltstartverhaltens der Katalysatoren wurde die Temperatur des Abgases linear von 75° C bis 450° C mit einer Heizrate von 15° C/min. hochgefahren. Dabei wurde gleichzeitig die Schadstoffkonvertierung aufgezeichnet. Die Temperaturen, bei denen Umsatzgrade von 50 % bzw. 90 % erzielt werden, werden kurz mit dem Index 50 bzw. 90 bezeichnet. Die Indizes dienen als Maß für die Anspringfreudigkeit des Katalysators zur Umsetzung der jeweiligen Schadstoffkomponente.

Der Prüfung aller Katalysatoren ging stets eine 24-stündige Alterung bei 950° C an Luft voraus.

Die mit den gemäß vorstehenden Beispielen erzielten Ergebnisse im statischen Konversionstest sind in der folgenden Tabelle dargestellt.

Tabelle 1

| Katalysator | Gleichgewichtskonversion [%] | | | | | |
| | λ=0,98 (fett) | | | λ=1,01 (mager) | | |
| | CO | HC | NOx | CO | HC | NOx |
|---|---|---|---|---|---|---|
| V-Beisp. 1 | 84 | 10 | 99 | 99 | 40 | 12 |
| Beispiel 1 | 85 | 10 | 99 | 99 | 94 | 35 |
| " 2 | 83 | 8 | 99 | 99 | 95 | 31 |
| " 3 | 84 | 9 | 99 | 99 | 94 | 30 |
| " 4 | 82 | 8 | 99 | 99 | 96 | 31 |
| " 5 | 84 | 9 | 99 | 99 | 97 | 29 |
| " 6 | 88 | 51 | 99 | 99 | 89 | 24 |
| V-Beisp. 2 | 77 | 79 | 95 | 99 | 75 | 15 |
| Beispiel 7 | 82 | 84 | 99 | 99 | 87 | 20 |
| V-Beisp. 3 | 75 | 26 | 82 | 99 | 78 | 19 |
| Beispiel 8 | 81 | 52 | 91 | 100 | 96 | 34 |
| " 9 | 96 | 94 | 100 | 99 | 89 | 27 |
| " 10 | 97 | 80 | 100 | 100 | 94 | 38 |
| " 11 | 86 | 92 | 99 | 99 | 84 | 40 |
| V-Beisp. 4 | 74 | 71 | 99 | 99 | 44 | 7 |
| Beisp. 12 | 73 | 89 | 99 | 99 | 70 | 28 |

Die Konversionswerte zeigen insgesondere bei magerem Betrieb für die Schadstoffe Kohlenwasserstoffe und Stickoxide eine signifikante Erhöhung bei Verwendung einer Cer enthaltenden Edelmetallimprägnierlösung.

Tabelle 2: Anspringverhalten im Fetten

(T=75° C → 450° C, Rate=15°/min, λ=0,98)

| Katalysator | Anspringtemperatur/° C | | | | | |
|---|---|---|---|---|---|---|
| | $CO_{50}$ | $CO_{90}$ | $HC_{50}$ | $HC_{90}$ | $NOx_{50}$ | $NOx_{90}$ |
| V-Beisp. 1 | 267 | 283 | – | – | 263 | 276 |
| Beispiel 1 | 273 | 287 | 371 | – | 272 | 285 |
| " 2 | 267 | 281 | 353 | – | 267 | 280 |
| " 3 | 267 | 281 | 330 | – | 268 | 280 |
| " 4 | 264 | 276 | – | – | 261 | 284 |
| " 5 | 259 | 279 | – | – | 254 | 283 |
| " 6 | 194 | 219 | 309 | – | 200 | 217 |
| V-Beisp. 2 | 193 | 239 | 323 | 398 | 201 | 216 |
| Beispiel 7 | 189 | 220 | 315 | 379 | 194 | 206 |
| V-Beisp. 3 | 259 | – | – | – | 298 | – |
| Beispiel 8 | 256 | 442 | 368 | – | 295 | 308 |
| Beispiel 9 | 260 | 278 | 305 | 363 | 262 | 278 |
| Beisp. 10 | 199 | 223 | 357 | – | 204 | 218 |
| " 11 | 232 | – | 314 | 391 | 233 | 251 |
| V-Beisp. 4 | 232 | – | 321 | – | 247 | 265 |
| Beisp. 12 | 229 | – | 302 | 358 | 239 | 260 |

Tabelle 3:  Anspringverhalten im Mageren

$(T=75^0 \; C \rightarrow 450^0 \; C, \; Rate=15^0/min, \; \lambda=1,01)$

| Katalysator | Anspringtemperatur/$^0$ C | | | | | |
|---|---|---|---|---|---|---|
| | $CO_{50}$ | $CO_{90}$ | $HC_{50}$ | $HC_{90}$ | $NOx_{50}$ | $NOx_{90}$ |
| V-Beisp. 1 | 274 | 289 | 450 | – | 273 | – |
| Beispiel 1 | 270 | 285 | 294 | 414 | 281 | – |
| " 2 | 265 | 277 | 288 | 398 | 280 | – |
| " 3 | 259 | 272 | 282 | 393 | 283 | – |
| " 4 | 263 | 277 | 339 | 410 | 286 | – |
| " 5 | 265 | 278 | 334 | 406 | 282 | – |
| " 6 | 255 | 265 | 300 | – | 277 | – |
| V-Beisp. 2 | 188 | 200 | 350 | – | – | – |
| " 7 | 185 | 194 | 326 | 450 | – | – |
| V-Beisp. 3 | 261 | 309 | 313 | 388 | – | – |
| Beispiel 8 | 258 | 303 | 297 | 368 | 289 | – |
| " 9 | 260 | 278 | 300 | 373 | 281 | – |
| " 10 | 197 | 212 | 298 | 362 | 293 | – |
| " 11 | 213 | 227 | 302 | 376 | 286 | – |
| V-Beisp. 4 | 216 | 227 | 365 | – | – | – |
| Beisp. 12 | 213 | 229 | 338 | – | 284 | – |

Das Anspringverhalten gemäß Tabellen 2 und 3 ändert sich bei den Schadstoffen CO und NOx kaum, verbessert sich aber bei HC. Dies gilt gleichermaßen für fette und magere Abgaszusammensetzungen.

## Patentansprüche

1. Katalysator für die Reinigung der Abgase von Brennkraftmaschinen mit Aluminiumoxid der Übergangsreihe als Träger, welcher 5 bis 70 Gew.-% $CeO_2$ und 1 bis 20 Gew.-% $ZrO_2$ enthält, und einer auf den Träger aufgebrachten aktiven Phase aus 0,03 bis 3 Gew.-% Platin, Palladium und/oder Rhodium und einem Unedelmetall, mit einem Gewichtsverhältnis zwischen Platin und/oder Palladium und dem gegebenenfalls anwesenden Rhodium von 2 : 1 bis 20 : 1, erhältlich durch Imprägnieren des Trägers mit einer wäßrigen Lösung von Cer- und Zirkoniumsalz oder durch Vermischen des Trägers mit einer wäßrigen Suspension von deren Oxiden, Hydroxiden oder Carbonaten und nachfolgendes Tempern an Luft bei 500 bis 900° C sowie anschließendes Imprägnieren des Trägers mit einer wäßrigen Lösung eines Salzes des Edelmetalls und des Unedelmetalls, Trocknen und Behandeln in einem Wasserstoff enthaltenden Gasstrom bei Temperaturen von 250 bis 650° C, **dadurch gekennzeichnet**, daß die durch Imprägnieren aufgebrachte aktive Phase neben den Edelmetallen als Unedelmetall Cer in einer Menge von 0,01 bis 150 Gew.-%, bezogen auf das Gesamtgewicht der vorliegenden Edelmetalle, enthält.

2. Katalysator nach Anspruch 1, dadurch gekennzeichnet, daß er zusätzlich bis 10 Gew.-% $Fe_2O_3$ und/oder bis 20 Gew.-% NiO enthält.

3. Katalysator nach Anspruch 1 oder 2, dadurch gekennzeichnet, daß der Träger gitterstabilisiert ist.

4. Katalysator nach den Ansprüchen 1 bis 3, dadurch gekennzeichnet, daß er in Form eines Überzugs auf einem wabenförmigen Träger aus Keramik oder Metall in einer Menge von 5 bis 30 Gew.-% bezogen auf das Gewicht des Trägers, vorliegt.

5. Verwendung des Katalysators nach den Ansprüchen 1 bis 4 als Oxidations- und/oder Reduktionskatalysator zur Reinigung der Abgase von Verbrennungskraftmaschinen.

## Claims

1. Catalyst for cleaning the exhaust gases from internal combustion engines, with aluminium oxide from the transition series as the support, which contains 5 to 70 % by weight of $CeO_2$ and 1 to 20 % by weight of $ZrO_2$, and an active phase, applied to the support, comprising 0.03 to 3 % by weight of platinum, palladium and/or rhodium and a non-noble metal, in a weight ratio between platinum and/or palladium and the rhodium, which is optionally present, of from 2 : 1 to 20 : 1, obtainable by impregnating the support with an aqueous solution of a cerium and zirconium salt or by mixing the support with an aqueous suspension of the oxides, hydroxides or carbonates thereof and subsequently conditioning the support in air at from 500 to 900°C and subsequently impregnating the support with an aqueous solution of a salt of the noble metal and of the non-noble metal, and drying and treating the support in a hydrogen-containing gas stream at temperatures from 250 to 650°C, characterized in that, besides the noble metals, the active phase applied by impregnation contains, as the non-noble metal, cerium in an amount of from 0.01 to 150 % by weight, based on the total weight of the noble metals present.

2. Catalyst according to Claim 1, characterized in that it additionally contains up to 10 % by weight of $Fe_2O_3$ and/or up to 20% by weight of NiO.

3. Catalyst according to Claim 1 or 2, characterized in that the support is lattice-stabilised.

4. Catalyst according to Claims 1 to 3, characterized in that it is present in the form of a coating on a honeycomb-like support made of ceramic or metal in an amount of from 5 to 30 % by weight, based on the weight of the support.

5. Use of the catalyst according to Claims 1 to 4 as an oxidation and/or reduction catalyst for cleaning the exhaust gases from internal combustion engines.

## Revendications

1. Catalyseur pour l'épuration des gaz d'échappement de motreurs à combustion interne, avec de l'oxyde d'aluminium de la série de transition en tant que support, lequel contient de 5 à 70 % en poids de $CeO_2$ et de 1 à 20 % en poids de $ZrO_2$, et une phase active appliquée sur le support, constituée de 0,03 à 3 % en poids de platine, de palladium et/ou de rhodium et d'un métal commun, avec un rapport pondéral entre le platine et/ou le palladium et le rhodium éventuellement présent allant de 2 : 1 à 20 : 1, pouvant être obtenu par imprégnation du support, avec une solution aqueuse de sel de cérium et de zirconium ou par mélange du support avec une suspension aqueuse de leurs oxydes, hydroxydes ou carbonates, et recuit subséquent à l'air à 500 - 900° C, ainsi qu'imprégnation subséquente du support avec une solution aqueuse d'un sel du métal noble et du métal commun, séchage et traitement dans un courant gazeux contenant de l'hydrogène, à des températures de 250 à 650° C, caractérisé en ce que, en plus des métaux nobles, la phase active appliquée par imprégnation contient comme métal commun du cérium en une quantité de 0,01 à 150 % en poids, par rapport au poids total des métaux nobles présents.

2. Catalyseur selon la revendication 1, caractérisé en ce qu'il contient en plus jusqu'à 10 % en poids de $Fe_2O_3$ et/ou jusqu'à 20 % en poids de NiO.

3. Catalyseur selon la revendication 1 ou 2, caractérisé en ce que le support est à réseau stabilisé.

4. Catalyseur selon les revendication 1 à 3, caractérisé en ce qu'il se trouve sous forme d'un revêtement sur un support en nid d'abeilles à base de céramique ou de métal, en une quantité de 5 à 30 % en poids, par rapport au poids du support.

5. Utilisation du catalyseur selon les revendications 1 à 4, en tant que catalyseur d'oxydation et/ou de réduction pour l'épuration des gaz d'échappement de moteurs à combustion interne.